# EUROPÄISCHE PATENTSCHRIFT

(11) **EP 1 125 353 B1**
(45) Veröffentlichungstag und Bekanntmachung des Hinweises auf die Patenterteilung: **13.10.2004**
(21) Anmeldenummer: 99971590.7
(22) Anmeldetag: 28.10.1999
(51) Int. Cl.: H02K 7/075, H02K 33/00, H02K 53/00

(54) **ELEKTROMAGNETISCH BETRIEBENER MOTOR**
ELECTROMAGNETICALLY OPERATED MOTOR
MOTEUR A FONCTIONNEMENT ELECTROMAGNETIQUE

(30) Priorität: 31.10.1998 DE 19850314; 27.05.1999 DE 29909293 U
(43) Veröffentlichungstag der Anmeldung: 22.08.2001
(73) Patentinhaber: Weinzierl, Johann, 90584 Allersberg (DE)
(72) Erfinder: Weinzierl, Johann, 90584 Allersberg (DE)
(74) Vertreter: Hübner, Gerd, Dipl.-Phys.
(86) Internationale Anmeldenummer: PCT/EP1999/008167
(87) Internationale Veröffentlichungsnummer: WO 2000/027015

(56) Entgegenhaltungen:
- DE-A- 3 013 459
- DE-A- 3 040 027
- DE-A- 4 424 525
- DE-A- 19 604 089
- GB-A- 2 248 525
- US-A- 3 967 146

## Beschreibung

Die Erfindung betrifft einen elektromagnetisch betriebenen Motor zur Erzeugung hoher Drehmomente unter geringstem Energieeinsatz.

Im Stand der Technik sind elektromagnetisch betriebene Motoren in vielfachen und sehr unterschiedlichen Ausführungsformen bekannt. So verwendet der landläufig als "Elektromotor" bezeichnete Motor oszillierend elektrisch beaufschlagbare Magnetspulen, was zu einem vergleichsweise schlechten Wirkungsgrad führt.

Ferner sind aus dem Stand der Technik Maschinen bekannt, bei denen mehr oder weniger geschickt angeordnete Permanentmagneten zur Umwandlung von magnetischer in kinetische Energie verwendet werden. So zeigt die DE 44 24 525 A1 eine Vorrichtung von dem sich der Gegenstand vorliegender Erfindung dadurch unterscheidet, daß der Motor einen elektrisch betriebenen Überbrückermagnet zur Erzeugung eines Wechselmagnetfeldes besitzt, so daß beim Wechsel des Hubmagneten vom anziehend wirkenden Rotationsmagnet-Sektor in den abstoßend wirkenden Rotationsmagnet-Sektor die momentan wirkende Abstoßkraft zwischen Hubmagneten und abstoßenden Rotationsmagnet-Sektor kompensierbar ist. Außerdem unterscheidet sich der Gegenstand vorliegender Erfindung dadurch von dem in der DE 44 24 525 A1 offenbartem, daß sich der Hubmagnet in einer Richtung parallel zur Wellenachse der Rotationsmagnet-Anordnung bewegt.

Obwohl der im Dokument DE 30 40 027 A1 offenbarte Motor auch einen elektrisch betriebenen Überbrückermagnet aufweist und nach dem gleichen physikalischen Prinzip funktioniert wie der Motor vorliegender Anmeldung, weist der Motor vorliegender Erfindung jedoch erhebliche Unterschiede im mechanischen Aufbau gegenüber dem Motor der DE 30 40 027 A1 auf.

Davon ausgehend liegt der Erfindung die Aufgabe zugrunde, einen elektromagnetisch betriebenen Motor zu schaffen, der aufgrund minimalen Einsatzes elektrische Energie und Ausnutzung von Permanent-Magnetfeldern effizient unter Erzeugung hoher Drehmomente zu betreiben ist.

Diese Aufgabe wird durch einen Motor gemäß Patentanspruch 1 gelöst.

Aus dem Vorstehenden wird deutlich, daß sich aufgrund der erfindungsgemäßen Konstruktion des Motors der Einsatz elektrischer Energie auf die Kompensation der beim Vorbeilaufen der Rotationsmagnet-Anordnung kurzzeit auf den Hubmagneten wirkenden Anziehungs- und Abstoßkraft beschränkt. Im übrigen läuft der Motor lediglich aufgrund der gegenseitigen Anziehung und Abstoßung zwischen Hubmagnet und Rotationsmagnet-Anordnung, was insoweit energieneutral ist.

Versuche mit Prototypen des Erfindungsgegenstandes haben insofern aufgezeigt, daß durch Einsatz mehrerer Hubmagnete, die über jeweils ihnen zugeordnete Kurbeltriebe mit der zentralen Welle gekoppelt sind, ein immer höheres Drehmoment durch den laufenden Motor erzeugbar ist, wobei der Versorgungsstrom für den elektrisch betriebenen Überbrückermagnet praktisch konstant bleibt. Dies ist insoweit erklärbar, als der Überbrückermagnet jeweils nur singulär die Anziehungs- und Abstoßkraft beim Wechsel eines einzigen Hubmagneten kompensieren muß, während an der Drehmoment-Erzeugung alle verbleibenden Hubmagneten beteiligt sind. Zur Verringerung des Fremdenergie-Bedarfs kann die Motorleistung z.T. für die Umsetzung in elektrische Energie zur Versorgung des Überbrükkermagneten verwendet werden.

Zu der beanspruchten Rotoranordnung ist festzuhalten, daß es sich dabei nicht nur um ein starres, drehbares Gebilde, wie z.B. eine Scheibe, sondern auch um eine umlaufende, entsprechend geführte Kette handeln kann, auf der die Permanent-Rotationsmagnet-Anordnung montiert ist.

Zusammenfassend ist der erfindungsgemäße Motor durch seinen relativ einfachen Aufbau kostengünstig herstellbar, wodurch er eine kurze Amortisierungszeit bietet. Sein Betrieb ist umweltfreundlich und von langer Lebensdauer sowie universeller Einsetzbarkeit geprägt.

Bevorzugte Ausführungsformen des Motors sind in den Unteransprüchen angegeben. Zu den damit verbundenen Vorteilen wird auf die nachfolgende Beschreibung verwiesen, in der ein Ausführungsbeispiel des Erfindungsgegenstandes anhand der beigefügten Zeichnungen näher erläutert wird. Es zeigen:
- Fig. 1: eine höchst schematische Seitenansicht des Motors,
- Fig. 2: eine Draufsicht auf den Rotor des Motors gemäß Pfeilrichtung II nach Fig. 1,
- Fig. 3A bis 3E: Prinzipdarstellungen der Abfolge beim Arbeitszyklus des Motors,
- Fig. 4: eine höchst schematische Teilseitenansicht eines Motors mit paarweiser Hubmagnet-Anordnung,
- Fig. 5: ein Schaubild der Abfolge beim Arbeitszyklus des Motors gemäß Fig. 4,
- Fig. 6: eine höchst schematische Seitenansicht des Motors mit einer alternativen Anordnung des Überbrückermagneten, und
- Fig. 7A und B: Prinzipdarstellungen analog Fig. 3 eines Motors in einer weiteren Ausführungsform.

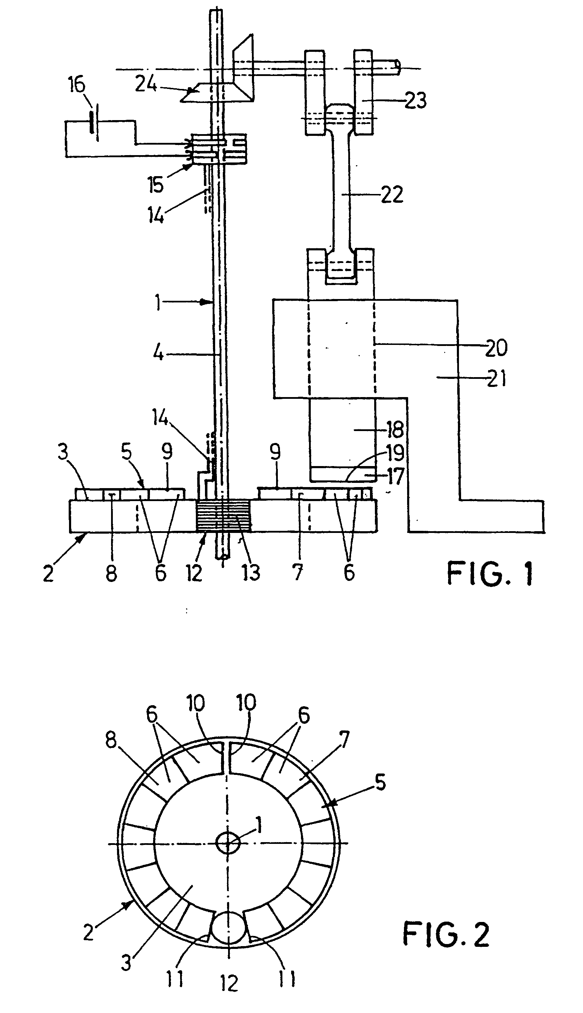

Wie aus Fig. 1 erkennbar ist, bildet das zentrale Teil des Motors eine an einem nicht dargestellten Maschinengestell gelagerte Welle 1, auf der drehfest ein scheibenförmiger Rotor 2 gelagert ist. Über die Welle 1 erfolgt einerseits der Motorabtrieb, andererseits stellt sie die Synchronisation der motorinternen Arbeitsvorgänge sicher, wie im folgenden noch näher erläutert wird.

Wie aus Fig. 1 in Zusammenschau mit Fig. 2 deutlich wird, ist auf der Oberseite 3 des Rotors 2 eine ringförmige, koaxial zur Wellenachse 4 angeordnete Permanent-Rotationsmagnet-Anordnung 5 vorgesehen, die aus einzelnen Permanentmagnet-Stücken 6 zusammengesetzt sind. Die Rotationsmagnet-Anordnung 5 ist dabei in zwei knapp 180° überdeckende Sektoren 7, 8 getrennt. Im einen Sektor 7 sind die Permanentmagnet-Stücke 6 so angeordnet, daß ihr magnetischer Nordpol nach oben weist, wogegen im Sektor 8 der magnetische Südpol nach oben weist. Die Polflächen 9 der Permanentmagnet-Stücke 6 weisen dabei in einer zur Wellenachse 4 parallelen Richtung.

Die beiden Sektoren 7, 8 weisen jeweils paarweise gegenüberstehende Enden 10 bzw. 11 auf, von denen die Enden 11 so weit auseinandergerückt sind, daß dazwischen ein elektrisch betriebener Überbrückermagnet 12 angeordnet werden kann. Die Achse seiner Magnetspule 13 weist ebenfalls in einer zur Wellenachse 4 parallelen Richtung. Die Magnetspule 13 wird über Zuleitungen 14 entlang der Welle 1 und über eine daran angeordnete Kommutator-Schleifring-Anordnung 15 mit einer Stromquelle 16 - beispielsweise einer Batterie - verbunden.

Die Rotationsmagnet-Anordnung 5 wirkt nun mit oszillierenden Hubmagneten 17 zusammen, von denen in Fig. 1 nur einer dargestellt ist. Wie in Fig. 2 jedoch angedeutet ist, können beispielsweise drei Hubmagneten 17 über den Umfangsrand des Rotors 2 verteilt an den strichliert angedeuteten Positionen angeordnet werden. Die Lagerung und Einbindung der Hubmagneten 17 in den Arbeitszyklus des Motors erfolgt dann in der Weise, wie sie am Beispiel des einen in Fig. 1 dargestellten Hubmagneten 17 im folgenden erläutert wird.

Dieser Hubmagnet 17 ist an einem als Kolbenschieber zu bezeichnenden Teil 18 so angeordnet, daß seine Polfläche 19 frontal gegenüber den Polflächen 9 der Rotationsmagnet-Anordnung 5 angeordnet ist. Der Kolbenschieber 18 ist in einem entsprechenden Schiebelager 20 des hier angedeuteten Maschinengestells 21 parallel zur Wellenachse 4 hin- und herverschiebbar gelagert. Der Kolbenschieber 18 ist an seinem dem Hubmagneten 17 abgewandten Ende mit dem zugewandten Ende eines Pleuels 22 verbunden, das an seinem anderen Ende an eine Kurbelwelle 23 gekoppelt ist. Kolbenschieber 18, Pleuel 22 und Kurbelwelle 23 bilden einen Kurbeltrieb, der die Auf- und Abbewegung des Hubmagneten 17 in eine Rotationsbewegung der Kurbelwelle 23 überträgt. Letztere ist quer zur Wellenachse 4 angeordnet und mit der Welle 1 über ein Kegelstirn-Zahnrad-Getriebe 24 gekoppelt, so daß die Rotation des Rotors 2 und die Auf- und Abbewegung des Hubmagneten 17 in genau definierter und synchroner Weise zueinander erfolgen können. Im übrigen kann anstatt des Kegelstirn-Zahnrad-Getriebes auch ein schrägverzahntes Stirnradgetriebe, Kardangetriebe oder Schnekkengetriebe eingesetzt werden.

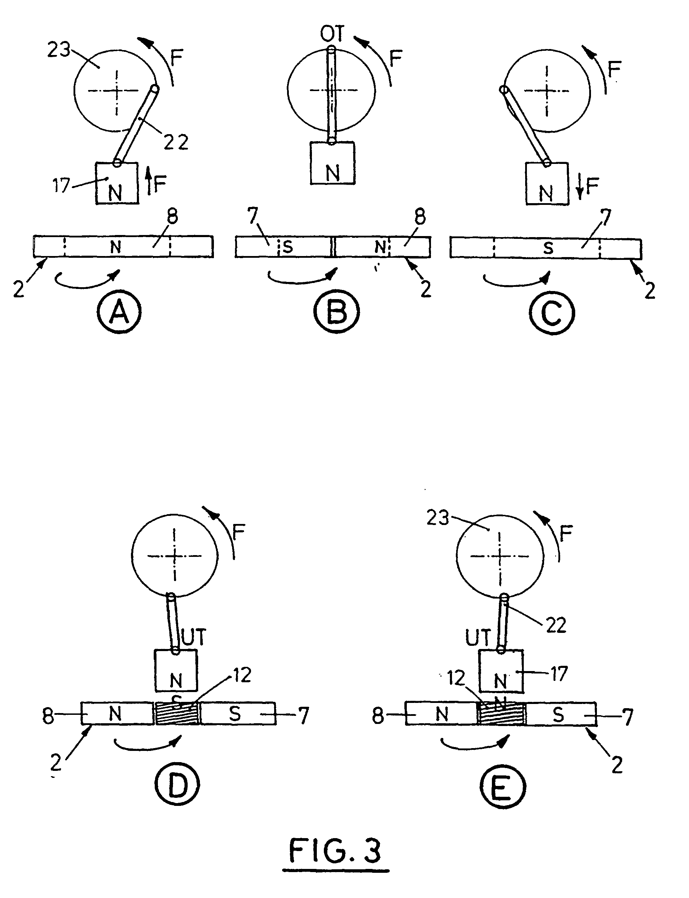

Vom Grundprinzip her wird der Hubmagnet, bei dem beispielsweise der magnetische Nordpol nach unten zur Rotationsmagnet-Anordnung 5 hin gerichtet ist, dann abgestoßen und damit eine Kraft auf den Kolbenschieber 18 nach oben ausgeübt, wenn unter dem Hubmagneten 17 der Sektor 7 der Rotationsmagnet-Anordnung 5 vorbeiläuft, bei dem der magnetische Nordpol nach oben gerichtet ist. Sobald der Hubmagnet 17 unter dem Einfluß des Kreissektors 8 mit nach oben gerichtetem magnetischen Südpol gerät, erfolgt dagegen eine Anziehung des Hubmagneten 17, so daß oszillierende Kräfte auf diesen wirken. Diese oszillierenden Kräfte können eine Oszillationsbewegung des Kolbenschiebers 18 hervorrufen, die wiederum eine Rotationsbewegung über den erwähnten Kurbeltrieb aus Schieber 18, Pleuel 22 und Kurbelwelle 23 hervorruft. Dies ist anhand von Fig. 3 augenscheinlich zu erläutern:

Ausgehend von der in Fig. 3A gezeigten Stellung wirkt auf den Hubmagneten 17 eine Kraft nach oben, die über das Pleuel 22 zu einer Drehung der Kurbelwelle 23 führt. Diese Rotation wird über das Getriebe 24 auf die Welle 1 zurückübertragen, so daß der Rotor 2 sich unter dem Hubmagneten 17 weiterbewegt, bis der Sektor 8 mit dem nach oben gerichteten magnetischen Südpol unter den Hubmagneten 17 einläuft. Die Synchronisierung der Hubmagnet- und Rotor-Bewegung wird so gewählt, daß in diesem Zustand der obere Totpunkt OT des Kurbeltriebes erreicht ist, so daß die anziehende Kraft zwischen Sektor 8 und Hubmagnet 17 folgerichtig in eine nach unten gerichtete Bewegung des Hubmagneten 17 mit entsprechender Weiterdrehung der Kurbelwelle 23 umgesetzt wird (Fig. 3C).

Besonderer Maßnahmen bedarf es nun beim Wechsel des Hubmagneten 17 aus dem Einflußbereich des Sektors 8 zurück in den Sektor 7, da hier hohe Abstoßungskräfte zwischen dem Magneten 17 und den gleichnamig gepolten Permanentmagnet-Stücken 6 des Sektors 7 herrschen. Um diese momentan wirkende Abstoßungskraft zu kompensieren, ist der Überbrückermagnet 12 vorgesehen, der kurz vor Durchlaufen des unteren Totpunktes UT so aktiviert wird, daß eine anziehende Kraft auf den Hubmagneten 17 ausgeübt wird. Mit Durchlaufen des unteren Totpunktes UT wird der Überbrückermagnet 12 mit Hilfe der Kommutator-Schleifring-Anordnung 15 umgepolt, so daß dann wieder eine maschinenzyklus-gerechte Abstoßung des Hubmagneten 17 erfolgt (Fig. 3E). Der Motor läuft schließlich in die in Fig. 3A gezeigte Stellung, wo der Motorzyklus von neuem beginnt. Insgesamt erzeugt der elektrisch betriebene Überbrückermagnet 12 also ein Wechselmagnetfeld, das mit dem Magnetfeld des jeweiligen Hubmagneten in der erläuterten Weise-kooperiert.

Bei der in Fig. 2 angedeuteten Verwendung von drei Hubmagneten 17 laufen deren Kurbeltriebe um 120° zueinander phasenversetzt, so daß sich ein runder Lauf des Motors ergibt. Dieser kann natürlich durch Verwendung weiterer Hubmagnete noch gesteigert werden. Nur beispielhaft ist auf einen Prototyp-Versuch mit dem Erfindungsgegenstand zu verweisen, bei dem mit einem Magnetpaar ein Drehmoment von 20 Nm an der Welle abgegriffen werden konnte, das sich bei zwei und drei Magnetpaaren auf Werte von 42 Nm bzw. 64 Nm bei konstantem Leistungsbedarf des Überbrückermagneten steigerte.

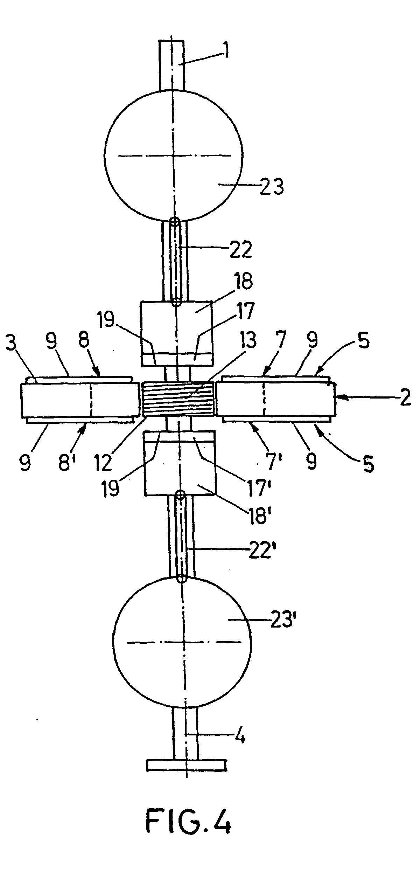

In Fig. 4 ist eine alternative Ausgestaltung des erfindungsgemäßen Motors mit den vorstehend erwähnten Magnetpaaren in einer Teildarstellung schematisch angedeutet. Hierbei arbeitet die Rotationsmagnet-Anordnung 5 am Rotor 2 paarweise mit jeweils mindestens einem Hubmagneten 17, 17' mit zugeordneter Baugruppe aus Kolbenschieber 18, 18', Pleuel 22, 22' und Kurbelwelle 23, 23' zusammen. Damit die untere Kurbelwelle 23' ebenfalls auf die Welle 1 über ein nicht dargestelltes Kegelstirn-Zahnrad-Getriebe 24 arbeiten kann, ist die Welle 1 entsprechend weit nach unten über den Rotor 2 hinaus verlängert. Analog dem Ausführungsbeispiel gemäß Fig. 1 bis 3 können bei der paarweisen Anordnung gemäß Fig. 4 wiederum mehrere der gezeigten Hubmagnet-Paare über den Umfangsrand des Rotors 2 verteilt angeordnet sein.

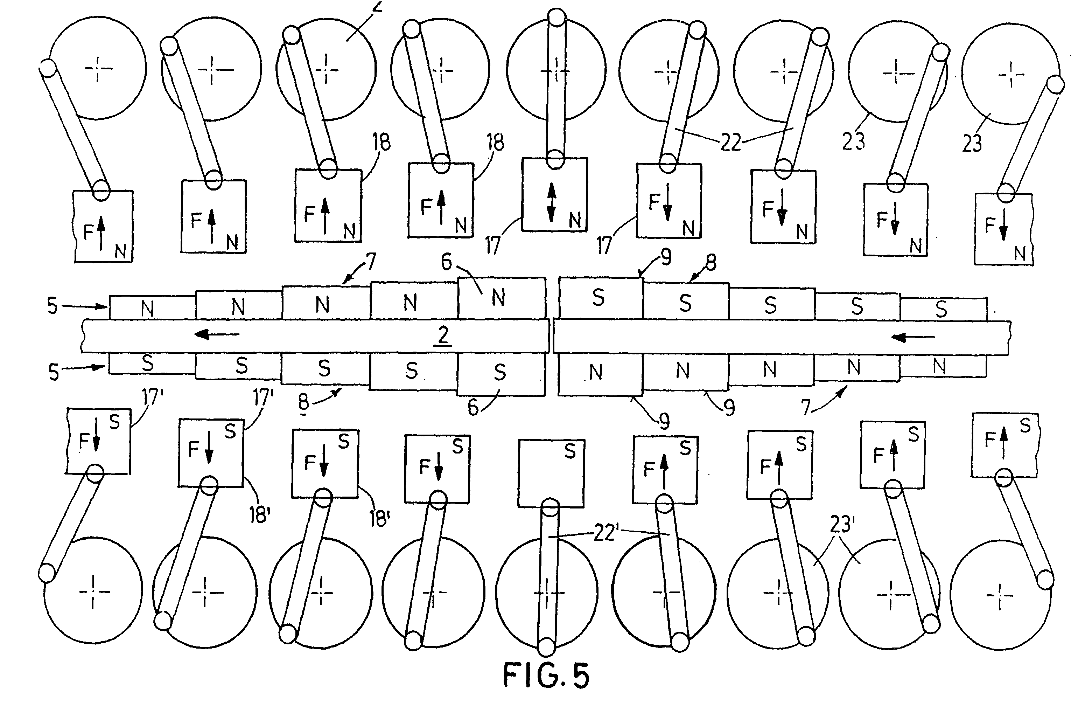

Die Funktionsweise des Motors gemäß Fig. 4 ergibt sich ohne die Notwendigkeit weiterer Erläuterungen aus der beschriebenen Funktionsweise des Motors nach Fig. 1 bis 3, wobei die magnetischen Verhältnisse und mechanisch-kinematischen Bewegungen der hinzugekommenen Hubmagnet-Baugruppe sich durch Spiegelung an der horizontalen Rotorebene ergeben. Entsprechend liest sich das Schaubild gemäß Fig. 5 durch die eingetragenen Magnetpol-Bezeichnungen "N" und "S" und die Wirkpfeile "F" der magnetischen Kräfte aus sich heraus. Der Deutlichkeit halber ist lediglich darauf hinzuweisen, daß in Fig. 5 praktisch eine Abwicklung des Rotors 2 mit der darauf befindlichen Rotationsmagnet-Anordnung 5 mit Sektoren 7, 8 dargestellt ist. Dieser Darstellung zeigt nach Art eines in Einzelbilder aufgelösten Filmes die jeweils passende Hubstellung der Hubmagneten 17, 17' in Relativstellung zum Rotor 2. Ferner ist in Fig. 5 angedeutet, daß die Einzelmagneten 6 so auf dem Rotor 2 angeordnet sind, daß das Niveau ihrer Polflächen 9 der Hubbewegung der Hubmagneten 17, 17' folgt.

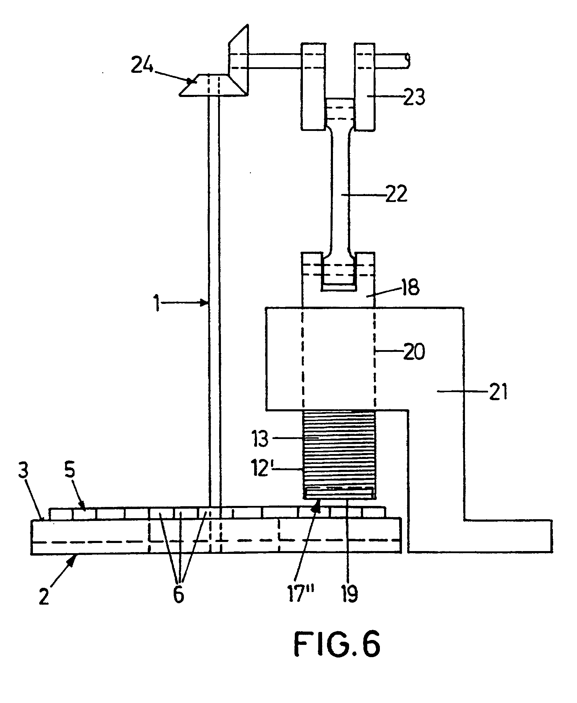

In Fig. 6 ist in Form einer Schemazeichnung eine alternative Anordnung des Überbrückermagneten 12' in Form einer Magnetspule 13 dargestellt. Ansonsten bezeichnen identische Bezugszeichen die anhand von Fig. 1 erläuterten Konstruktionsteile des Motors. Die Magnetspule der Überbrükkermagneten 12' ist nicht mehr zwischen den beiden Rotationsmagnet-Sektoren 7, 8 am Rotor 2, sondern als kleinere Spule 13 um den Hubmagneten 17" angeordnet. Diese Spule 12' neutralisiert die am Rotor gegen die Drehrichtung wirkende Kraft beim Wechsel des Hubmagneten 17" von einer magnetischen Domäne (Abstoßung) zur anderen (Anziehung).

Obwohl diese alternative Ausführungsform in Fig. 6 am höchst schematischen Beispiel einer Scheibenanordnung des Rotors 2 gezeigt ist, ist diese Ausführungsform mit einem kompensierenden Überbrückermagneten 12' am Hubmagneten 17' mit besonderem Vorteil in mechanischer Hinsicht bei einem Rotor in Kettenform realisierbar.

Während sich die elektrische Leistung zur Ansteuerung des Überbrückermagneten 12 bei der in Fig. 1 gezeigten Ausführungsform nach der Stärke der Permanentmagneten richtet, die am Rotor 2 vor und nach der Überbrückermagnet-Spule 12 wirken, ist bei der Ausführungsform gemäß Fig. 6 an der Spule zur Neutralisierung des Hubmagneten 17" die Leistung erforderlich, die der Permanentmagnet der Hubeinrichtung zur Aufhebung seiner Kraft benötigt. Es muß also nicht die magnetische Kraft überwunden werden, die am Rotor wirkt. Insoweit ist bei der Art von Kompensation gemäß Fig. 6 ein geringerer Leistungsaufwand notwendig.

Werden nämlich zwei Magneten gleichpolig mit großer Flußdichte zusammengeführt, so wird eine verhältnismäßig große Abstoßungskraft erhalten. Werden zwei Magneten gleichpolig mit geringer Flußdichte zusammengeführt, tritt im Gegensatz dazu eine kleine Abstoßungskraft auf. Bei Annäherung eines Magneten mit großer Flußdichte und eines Magneten mit geringerer Flußdichte wird eine kleine Abstoßkraft erzeugt. Letztere richtet sich also immer nach dem schwächsten Magneten, der an der Magnetpaarung beteiligt ist.

Für die erfindungsgemäße Maschine bedeutet dies, daß aufgrund der unterschiedlichen Kräfte zwischen Hub- und Rotationsmagneten beim Übergang des Hubmagneten 17, 17', 17'' vom Permanentmagnet-Sektor 7 zum anderen Permanentmagnet-Sektor 8 die Überbrücker-Magnetspule 12' nur das Magnetfeld des schwächeren Rotationsmagneten am Rotor 2 erzeugen muß, wobei die Spannungsspitze beim Eintauchen der Spule in das Magnetfeld vom stärkeren Hubmagneten 17" abhängig ist. Diese Spannungsspitze kann zur Rückführung elektrischer Leistung in den Akkumulator verwendet werden. So ist die zurückfließende Leistung bei einem Versuchsmodell zu 12,5 Watt bei 124 Volt und einer Drehzahl von ca. 300/min. pro Hubeinheit gemessen worden. Der magnetische Luftspalt zwischen Hubmagnet 17" und Permanentmagnet-Sektoren 7, 8 betrug dabei 7 mm.

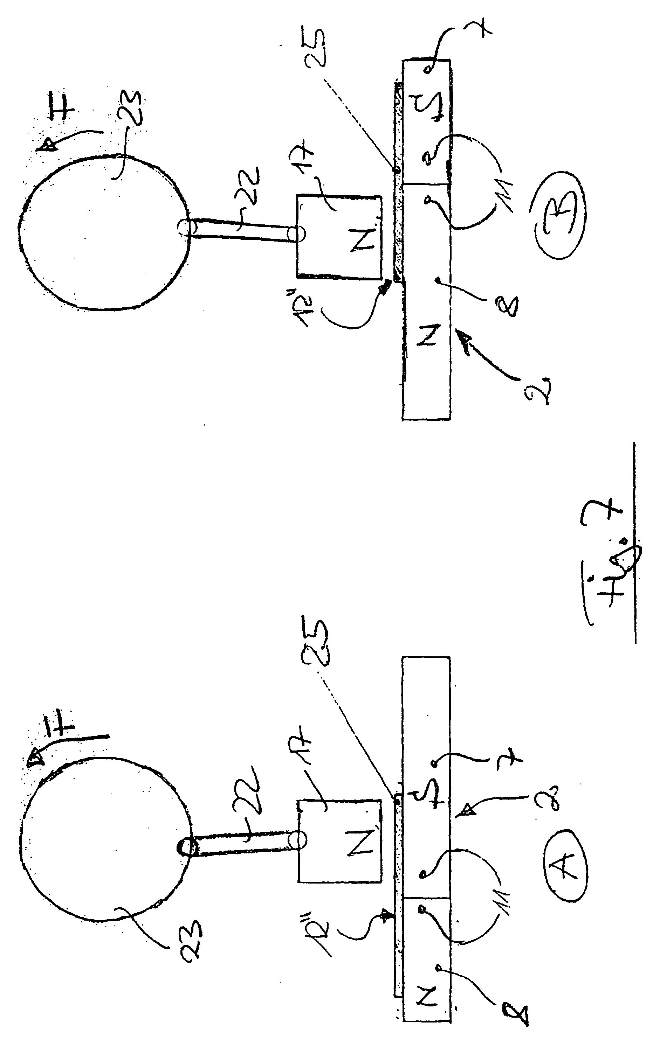

In den Fig. 7A und B ist schematisch eine weitere Ausführungsform des Motors gezeigt, wobei sich die Darstellung an der gemäß Fig. 3 anlehnt. Die Fig. 7A und B entsprechen dabei den Motorstellungen, wie sie in Fig. 3 in den Teildarstellungen D und E gezeigt sind. Im Unterschied zur Ausführungsform gemäß den Fig. 1 bis 3 ist der Überbrückermagnet 12" jedoch nicht als zwischen den beiden Sektoren 7, 8 angeordneter Magnet, sondern als Abschirmmagnetfläche 25 in Form einer hochpermeablen Folie oder Platte ausgebildet. Diese ist einerseits zwischen den Sektoren 7, 8 im Übergangsbereich zwischen den beiden Magnetdomänen und den Hubmagneten 17 andererseits angeordnet. Das hochpermeable Material kann z. B. Kupfer oder Aluminium sein.

Bei der in Fig. 7A gezeigten Stellung ist die Abschirmmagnetfläche 25 als solche noch nicht magnetisch. Erst mit einem elektrischen Signal zur elektrischen Beaufschlagung der Abschirmmagnetfläche 25 werden die Feldlinien der Sektoren 7, 8 abgeschirmt, da sie quasi dem Weg des geringsten Widerstandes folgen, also z. B. auf der Oberfläche der Abschirmmagnetfläche 25 verlaufen. Damit wird die Abstoßungswirkung zwischen dem Sektor 8 (Nordpol) und dem Hubmagneten 17 (ebenfalls Nordpol) während des Überwechselns vom Sektor 7 (Südpol) zum Sektor 8 kompensierend abgeschirmt. Nach Durchfahren des unteren Totpunkts UT wird das elektrische Signal an der Abschirmmagnetfläche 25 wieder aufgehoben und der Arbeitszyklus durch Abstoßung zwischen dem Sektor 8 und dem Hubmagneten 17 beginnt von neuem, wie dies bereits anhand der Fig. 3A ff. erläutert wurde.

## Patentansprüche

1. Elektromagnetisch betriebener Motor mit
- einer Rotoranordnung (2), die mit einer zentralen, drehgelagerten Welle (1) verbunden ist,
- einer auf mindestens einer Seite (3) des Rotoranordnung (2) angeordneten, ringförmigen Permanent-Rotationsmagnet-Anordnung (5), die in mindestens zwei Sektoren (7, 8) geteilt ist, von denen der eine eine erste Magnetpol-Orientierung aufweist, sowie von denen der andere eine dazu entgegengesetzte Magnetpol-Orientierung oder ferromagnetische Eigenschaften aufweist, und die koaxial zur Achse (4) der Welle (1) angeordnet und mit ihren Polflächen (9) in zur Wellenachse (4) paralleler Richtung weist,
- mindestens einem vor den Magnetpolen der Rotationsmagnet-Anordnung (5) angeordneten Permanent-Hubmagneten (17, 17'),
-- der unter zyklischer Abstoßung und Anziehung durch die während der Rotordrehung vorbeilaufende Rotationsmagnet-Anordnung (5) linear in einer Richtung parallel zur Wellenachse (4) hin- und herverschiebbar an einem Motorgestell (21) gelagert ist, und
-- der mit einer Kurbelwelle (23, 23') gekoppelt ist,
- einem Getriebe (24) zur Kopplung der Kurbelwelle (23, 23') mit der Rotorwelle (1), und
- einem elektrisch betriebenen Überbrückermagnet (12, 12', 12") zur Erzeugung eines Wechselmagnetfeldes, so daß beim Wechsel des Hubmagneten (17, 17', 17") vom anziehend wirkenden Rotationsmagnet-Sektor (7, 8) in den abstoßend wirkenden Rotationsmagnet-Sektor (7, 8) die momentan wirkende Abstoßkraft zwischen Hubmagneten (17, 17', 17") und abstoßenden Permanentmagnet-Sektor (7, 8) kompensierbar ist.

2. Motor nach Anspruch 1, **dadurch gekennzeichnet, daß der** Überbrükkermagnet (12) zwischen einem der beiden Endenpaare (10, 11) der Rotationsmagnet-Sektoren (7, 8) angeordnet ist und ein mit dem Magnetfeld des jeweiligen Hubmagneten (17, 17') kooperierendes Wechselmagnetfeld erzeugt.

3. Motor nach Anspruch 1, **dadurch gekennzeichnet, daß** der Überbrükkermagnet (12') am Hubmagneten (17") angeordnet ist und ein mit dem Magnetfeld des jeweiligen Rotationsmagnet-Sektors (7, 8) kooperierendes Wechselfeld erzeugt.

4. Motor nach Anspruch 1, **dadurch gekennzeichnet, daß** der Überbrükkermagnet (12") in Form einer ein Endenpaar (10, 11) der Rotationsmagnet-Sektoren (7, 8) zum Permanent-Hubmagneten (17) hin abdeckenden, elektrisch beaufschlagbaren Abschirmmagnetfläche (25) ausgebildet ist.

5. Motor nach Anspruch 4, **dadurch gekennzeichnet, daß** die Abschirmmagnetfläche (25) als Platte, Folie oder die Endenpaare (10, 11) umgebende Spule ausgebildet ist.

6. Motor nach einem der Ansprüche 1 bis 5, **dadurch gekennzeichnet, daß** die Rotoranordnung einen drehfest auf der Welle (1) sitzenden Rotor (2) umfaßt.

7. Motor nach einem der Ansprüche 1 bis 6, **dadurch gekennzeichnet, daß** die Rotationsmagnet-Anordnung (5) durch einzelne, in dem jeweiligen Sektor (7, 8) aneinandergereihte Permanent-Magnete (6) gebildet ist.

8. Motor nach einem der Ansprüche 1 bis 7, **dadurch gekennzeichnet, daß** die Magneten (6) derart dimensioniert oder auf der Rotoranordnung (2) angeordnet sind, daß das Niveau ihrer Polflächen (9) der Hubbewegung der Hubmagneten (17,17') folgt.

9. Motor nach einem der Ansprüche 1 bis 8, **dadurch gekennzeichnet, daß** die Permanentmagnet-Anordnung (5) einzeln oder paarweise mit jeweils mindestens einer zugeordneten, aus Hubmagnet (17, 17'), Kurbeltrieb (18, 18', 22, 22', 23, 23') und Getriebe (24) gebildete Baugruppe oberhalb und unterhalb der Rotoranordnung (2) kooperiert.

10. Motor nach einem der Ansprüche 1 bis 9, **dadurch gekennzeichnet, daß** mehrere, aus Hubmagnet (17, 17'), Kurbeltrieb (18, 18', 22, 22', 23, 23') und Getriebe (24) bestehende Baugruppen äquidistant über dem Umfangsrand des Rotors (2) verteilt angeordnet sind.

11. Motor nach einem der Ansprüche 1 bis 10, **dadurch gekennzeichnet, daß** das Getriebe zwischen Kurbelwelle (23, 23') und Rotorwelle (1) jeweils durch ein Kegelstirn-Zahnrad-Getriebe (24) gebildet ist.

12. Motor nach einem der Ansprüche 1, 2 oder 4 bis 11, **dadurch gekennzeichnet, daß** der Überbrückermagnet (12) an der Rotoranordnung, (2) über eine Kommutator-Anordnung (15) mit einer Stromquelle (16) verbindbar ist.

13. Motor nach einem der Ansprüche 1, 2 oder 4 bis 12, **dadurch gekennzeichnet, daß** der mit den Hubmagneten (17, 17') gekoppelte Kurbeltrieb (18, 18', 22, 22', 23, 23') derart mit der Bewegung der Rotoranordnung (2) gekoppelt ist, daß der Vorbeilauf des Überbrückermagneten (12,12') am jeweiligen Hubmagneten zumindest näherungsweise im unteren Totpunkt des Kurbeltriebes (18, 18', 22, 22', 23, 23') erfolgt.

## Claims

1. Electromagnetically operated motor comprising
- a rotor device (2) connected with a central, pivotable shaft (1),
- an annular permanent rotary magnet device (5) arranged on at least one side (3) of the rotor device (2), which is divided in at least two sectors (7, 8), one of which comprising a magnetic pole orientation and the other comprising an oppositely poled magnetic pole orientation or ferromagnetic features, and which is arranged coaxially to the axis (4) of the shaft (1) and with its pole faces (9) points in a direction parallel to the shaft axis (4),
- at least one permanent stroke magnet (17, 17') arranged in front of the magnetic poles of the rotary magnet device,
-- which, under cyclical repulsion and attraction by the rotary magnet device (5) passing by during rotation of the rotor device, is supported in linearly reciprocating motion on a motor mount (21) in a direction parallel to the shaft axis (4), and
-- which is coupled with a crankshaft (23, 23'),
- a gear (24) for coupling the crankshaft (23, 23') with the rotor shaft (1), and
- an electrically operated by-pass magnet (12, 12', 12") for generating an alternating magnetic field, in such a way that the currently acting repulsing force between the stroke magnet (17, 17', 17") and the repulsing permanent magnet sector (7, 8) can be compensated when the stroke magnet (17, 17', 17") changes from the attracting rotary magnet sector (7, 8) to the repulsing rotary magnet sector (7, 8).

2. Motor according to claim 1, **characterized in that** the by-pass magnet (12) is arranged between one of the two end pairs (10, 11) of the rotary magnet sectors (7, 8) and generates an alternating magnetic field cooperating with the magnetic field of the respective stroke magnet (17, 17').

3. Motor according to claim 1, **characterized in that** the by-pass magnet (12') is arranged on the stroke magnet (17") and generates an alternating magnetic field cooperating with the magnetic field of the respective rotary magnet sector (7, 8).

4. Motor according to claim 1, **characterized in that** the by-pass magnet (12") is developed in the form of an electrically chargeable screening magnetic face (25) masking an end pair (10, 11) of the rotary magnet sector (7. 8) towards the permanent stroke magnet (17).

5. Motor according to claim 4, **characterized in that** the screening magnetic face (25) is formed as a plate, foil or reel surrounding the end pairs (10, 11).

6. Motor according to one of claims 1 to 5, **characterized in that** the rotor device comprises a rotor (2) mounted on the shaft (1) in rotationally static manner.

7. Motor according to one of claims 1 to 6, **characterized in that** the rotary magnet device (5) is formed by separate permanent magnets (6) stringed together in the respective sector (7, 8).

8. Motor according to one of claims 1 to 7, **characterized in that** the magnets (6) are dimensioned or arranged on the rotor device (2) such that the level of their pole faces (9) follows the reciprocating motion of the stroke magnet (17, 17').

9. Motor according to one of claims 1 to 8, **characterized in that** the permanent magnet device (5), separately or pairwise, respectively cooperates with at least one associated assembly formed by stroke magnet (17, 17'), crank drive (18, 18', 22, 22', 23, 23') and gear (24), above and below the rotor device (2).

10. Motor according to one of claims 1 to 9, **characterized in that** several assemblies formed by stroke magnet (17, 17'), crank drive ( 18, 18', 22, 22', 23, 23') and gear (24) are arranged equally spaced around the peripheral edge of the rotor (2).

11. Motor according to one of claims 1 to 10, **characterized in that** the gear (24) between the crank shaft (23, 23') and the rotor shaft (1) is formed by a straight bevel toothed gear (24) at a time.

12. Motor according to one of claims 1, 2 or 4 to 11, **characterized in that** the by-pass magnet (12) on the rotor device (2) is connectable with a power source (16) by means of a commutator device (15).

13. Motor according to one of claims 1, 2 or 4 to 12, **characterized in that** the crank drive (18, 18', 22, 22', 23, 23') coupled with the stroke magnet (17, 17') is coupled with the movement of the rotor device (2) in such a way that the passing of the by-pass magnet (12, 12') at the respective stroke magnet takes place at least approximately in the bottom dead center of the crank drive (18, 18', 22, 22', 23, 23').

## Revendications

1. Moteur à fonctionnement électromagnétique avec
- un dispositif de rotor (2) relié à un arbre (1) central pivotant,
- un dispositif de rotation à aimants permanents (5) en forme d'anneau placé au moins sur un côté (3) du dispositif de rotor (2), dispositif divisé au moins en deux secteurs (7, 8) dont l'un comporte une première orientation vers le pôle magnétique et dont l'autre comporte une orientation opposée au pôle magnétique ou possède des propriétés ferromagnétiques et qui sont disposés de façon coaxiale à l'axe (4) de l'arbre (1) et se présentent parallèlement à l'axe de l'arbre (4) avec leurs faces polaires (9),
- au moins un électroaimant de levage permanent (17, 17') placé devant les pôles magnétiques du dispositif de rotation à aimant (5),
- qui est placé au niveau du châssis du moteur (21) de façon linéaire et se déplaçant d'avant en arrière parallèlement à l'axe de l'arbre (4) sous une répulsion et une attraction cyclique par le dispositif de rotation à aimants (5) défilant pendant la rotation du rotor, et
- qui est couplé à un arbre à manivelle (23, 23'),
- un mécanisme (24) de couplage de l'arbre à manivelle (23, 23') avec l'arbre de rotor (1), et
- un aimant de pontage (12, 12', 12") actionné électriquement pour générer un champ magnétique d'échange, de sorte que lors de l'échange de l'électroaimant de levage (17, 17', 17") du secteur de rotation à aimant (7, 8) agissant de façon attractive dans le secteur de rotation à aimant (7, 8) agissant de façon répulsive, la force de répulsion agissant momentanément entre les électroaimants de levage (17, 17', 17") et le secteur à aimants permanents (7, 8) répulsif peut être compensée.

2. Moteur selon la revendication 1, **caractérisé en ce que** l'aimant de pontage (12) est placé entre l'une des deux paires d'extrémité (10, 11) des secteurs de rotation à aimants (7, 8) et **en ce qu'**il génère un champ magnétique d'échange coopérant avec le champ magnétique des électroaimants de levage (17, 17') respectifs.

3. Moteur selon la revendication 1, **caractérisé en ce que** l'aimant de pontage (12') est placé au niveau de l'électroaimant de levage (17") et **en ce qu'**il génère un champ magnétique coopérant avec le champ magnétique du secteur de rotation à aimants (7, 8) respectif.

4. Moteur selon la revendication 1, **caractérisé en ce que** l'aimant de pontage (12") a la forme d'une surface magnétique blindée (25) pouvant être alimentée électriquement recouvrant une paire d'extrémité (10, 11) des secteurs de rotation à aimants (7, 8) par rapport à l'électroaimant de levage permanent (17).

5. Moteur selon la revendication 4, **caractérisé en ce que** la surface magnétique blindée (25) est formée comme bobine entourant une plaque, une feuille ou la paire d'extrémité (10, 11).

6. Moteur selon l'une quelconque des revendications 1 à 5, **caractérisé en ce que** le dispositif de rotor comprend un rotor (2) sur l'arbre (1) pour résister à la torsion.

7. Moteur selon l'une quelconque des revendications 1 à 6, **caractérisé en ce que** le dispositif de rotation à aimants (5) est formé par des aimants permanents (6) individuels placés les uns à côté des autres dans le secteur respectif (7, 8).

8. Moteur selon l'une quelconque des revendications 1 à 7, **caractérisé en ce que** les aimants (6) sont dimensionnés ou placés sur le dispositif de rotor (2) de sorte que le niveau de leurs surfaces polaires (9) suit le mouvement de levage des électroaimants de levage (17, 17').

9. Moteur selon l'une quelconque des revendications 1 à 8, **caractérisé en ce que** le dispositif à aimants permanents (5) coopère individuellement ou par paire avec respectivement au moins un groupe formé d'un .électroaimant de levage (17, 17'), une commande à manivelle (18, 18', 22, 22', 23, 23') et un mécanisme (24) au-dessus et en dessous du dispositif de rotor (2).

10. Moteur selon l'une quelconque des revendications 1 à 9, **caractérisé en ce que** plusieurs groupes composés d'un électroaimant de levage (17, 17'), d'une commande à manivelle (18, 18', 22, 22', 23, 23') et d'un mécanisme (24) sont placés séparément à équidistance du bord circonférentiel du rotor (2).

11. Moteur selon l'une quelconque des revendications 1 à 10, **caractérisé en ce que** le mécanisme entre l'arbre à manivelle (23, 23') et l'arbre du rotor (1) est formé respectivement par un engrenage droit à pignons coniques (24).

12. Moteur selon l'une quelconque des revendications 1, 2 ou 4 à 11, **caractérisé en ce que** l'aimant de pontage (12) peut être relié au dispositif de rotor (2) par un dispositif de commutation (15) avec une source de courant.

13. Moteur selon l'une quelconque des revendications 1, 2 ou 4 à 12, **caractérisé en ce que** la commande à manivelle (18, 18', 22, 22', 23, 23') couplée aux électroaimants de levage (17, 17') est couplée avec le mouvement du dispositif de rotor (2) de sorte que le défilement de l'aimant de pontage (12, 12') a lieu au niveau des électroaimants de levage respectifs au moins de façon approximative dans le point mort inférieur de la commande à manivelle (18, 18', 22, 22', 23, 23').
